# EUROPÄISCHE PATENTANMELDUNG

(11) **EP 1 721 673 A1**
(43) Veröffentlichungstag der Anmeldung: **15.11.2006**
(21) Anmeldenummer: 06009883.7
(22) Anmeldetag: 12.05.2006
(51) Int. Cl.: B02C 4/04, A23G 1/12

(54) **Walzenreibmaschine**

(30) Priorität: 13.05.2005 DE 102005022378
(71) Anmelder: F.B. LEHMANN Maschinenfabrik GmbH, D-73431 Aalen (DE)
(72) Erfinder: Essig, Joachim, 73540 Heubach (DE)
(74) Vertreter: Volpert, Marcus

(57) **Zusammenfassung**

Walzenreibmaschine, insbesondere Fünfwalzwerk zum Vermahlen teigigpastöser Massen, wie Schokoladenmassen.

Aus der Praxis sind Walzenreibmaschinen mit mehreren Walzen bekannt, welche mittels einer zentralen Antriebseinrichtung über einen Drehstrommotor mit Keilriemenantrieb sowie Zahnradpaarungen an den Walzen angetrieben werden. Die neue Walzenreibmaschine soll flexibler an jeweilige Anwendungsfälle anpassbar sein.

Dazu weist die Antriebseinrichtung (10) für jede Walze (4 - 8) eine eigene, separate Antriebseinheit (12 - 16) auf, wobei die einzelnen Antriebseinheiten (12 - 16) unabhängig voneinander steuerbar sind.

Verarbeiten, insbesondere Vermahlen von Schokoladenmassen.

## Beschreibung

Die Erfindung bezieht sich auf eine Walzenreibmaschine, insbesondere ein Fünfwalzwerk zum Vermahlen teigig-pastöser Massen, wie Schokoladenmassen, nach dem Oberbegriff des Patentanspruchs 1.

Aus der Praxis sind Fünfwalzwerke bekannt, welche eine zentrale Antriebseinrichtung aufweisen. Diese zentrale Antriebseinrichtung ist derart ausgestaltet, dass über einen auf dem Maschinenständer aufgesetzten Drehstrommotor mit Keilriemenantrieb die oberste, fünfte Walze angetrieben wird. Über Zahnradpaarungen wird die Antriebskraft von der fünften Walze sozusagen von oben nach unten auf die vierte, von dieser auf die dritte, von dieser auf die zweite und schließlich von der zweiten auf die erste Walze übertragen. Die unterste, erste Walze rotiert am langsamsten etwa zwischen 30 bis 60 U/min. Die Drehzahl der einzelnen Walzen steigert sich von unten nach oben bis hin zu etwa 400 U/min bei der obersten, fünften Walze. Aus den unterschiedlichen Drehzahlen unmittelbar einander zugeordneter Walzen folgt, dass zwischen jeweils aneinander reibenden Walzenpaaren eine Differenzgeschwindigkeit vorherrscht, welche die Reibung zwischen den bewegten Walzen, üblicherweise Friktion genannt, bewirkt. Diese Friktion ist maßgeblich verantwortlich für die Zerkleinerung der Partikel der jeweiligen Masse, wie z.B. Schokoladenmasse, im Walzenspalt durch Verreiben und für die Weitergabe des Produktfilms der Masse immer von der jeweils langsamer rotierenden Walze an die jeweils schneller rotierende Walze. Die Masse, auch Produktmasse oder Produkt genannt, wird üblicherweise im Walzenspalt zwischen der ersten und der zweiten Walze aufgegeben, dann von unten nach oben immer feiner zerrieben, bis sie schließlich auf der Rückseite der Walzenreibmaschine auf der obersten fünften Walze mittels einer sogenannten Abstreifklinge abgenommen wird. Schließlich wird das Produkt über eine sogenannte Ablaufschurre der weiteren Verarbeitung zugeführt.

Ferner ist aus der Praxis der separate Antrieb der beiden unteren Walzen, der sogenannten Produkt-Einzugswalzen, bekannt, wobei der separate Antrieb gemeinsam über einen Antrieb und eine Zahnradpaarung erfolgen kann.

Bei der Verarbeitung verschiedener Massen, beispielsweise mit unterschiedlichem Fettgehalt oder mit unterschiedlichem Milchpulveranteil, wäre sowohl eine Änderung der Walzendrehzahl als auch eine Änderung der Friktionen wünschenswert, um damit die Walzenreibmaschine optimal an den jeweiligen Einsatzfall anpassen zu können. Bei den zuvor beschriebenen, bekannten Walzenreibmaschinen kann eine Änderung der Drehzahl jedoch nur für das gesamte System erfolgen. Üblicherweise erfolgt eine Änderung der Drehzahl über den zentralen Antrieb oder durch Austausch der Riemenscheiben. Eine Veränderung der Friktion ist nur schwer möglich, da die einzelnen Walzen, welche üblicherweise in Form von Walzenröhren ausgebildet sind, über starre Zahnradpaarungen miteinander verbunden sind. Eine Änderung der Friktion würde daher einen kompletten Austausch der jeweiligen Zahnradpaarungen erfordern. Ein solcher Umbau ist in der Praxis aufgrund des überaus hohen Aufwandes wirtschaftlich kaum durchführbar. Lediglich während der Inbetriebnahme einer Walzenreibmaschine wird in der oben beschriebenen Weise vorgegangen, um die Maschine an ein sogenanntes Referenzprodukt optimal anzupassen. Bei der Umstellung der jeweiligen Maschine auf andere Produkte sind dann bezüglich Durchsatzleistung (Einzugsverhalten) und Produktqualität nicht unbeträchtliche Kompromisse einzugehen. In größeren Verarbeitungsbetrieben sind die Maschinen jeweils ausschließlich in Bezug auf ein bestimmtes Produkt ausgelegt.

Der Erfindung liegt die Aufgabe zugrunde, eine Walzenreibmaschine der eingangs erwähnten Art zu schaffen, welche flexibler an den jeweiligen Anwendungsfall anpassbar ist.

Diese Aufgabe wird erfindungsgemäß durch eine Walzenreibmaschine mit den Merkmalen des Patentanspruchs 1 gelöst.

Vorteilhafte Weiterbildungen sind Gegenstand der Unteransprüche.

Erfindungsgemäß weist die Antriebseinrichtung für jede Walze eine eigene, separate Antriebseinheit auf, wobei die einzelnen Antriebseinheiten unabhängig voneinander steuerbar sind. Damit erhält jede Walze einen sogenannten Einzelantrieb. Eine mit derartig angetriebenen Walzen bestückte Walzenreibmaschine lässt sich äußerst flexibel an den jeweiligen Anwendungsfall anpassen, da die Drehzahlen und/oder die Friktionen unabhängig voneinander schnell und unproblematisch geändert und damit auf ein neues Produkt eingestellt werden können. Aufwendige Umrüstungen und längere Stillstandszeiten können so vermieden werden. Ein und dieselbe Walzenreibmaschine ist in der Lage, unterschiedliche Massen/Produkte zu verarbeiten, so dass die Maschine letztlich bedeutend wirtschaftlicher als eine herkömmliche Walzenreibmaschine arbeiten kann. Durch die voneinander unabhängige Steuerung der einzelnen Walzen ist es möglich, die Drehzahl der jeweiligen Walze und die zwischen zwei Walzen im Walzenspalt herbeigeführte Friktion von Fall zu Fall gesondert und unabhängig voneinander einzustellen, wobei zur Änderung der Friktion zwischen zwei Walzen lediglich die Geschwindigkeit einer der Walzen verändert oder aber die Geschwindigkeiten beider Walzen so verändert werden, dass im Walzenspalt eine andere Friktion herbeigeführt wird. Die Montage der Maschine ist wesentlich vereinfacht, zudem ist die Maschine wesentlich besser zugänglich, da Zahnradpaarungen mit dazugehörigen Ölkästen wie bei Maschinen im Stand der Technik erfindungsgemäß nicht mehr vorhanden sind. Ferner kann beim Nachschleifen der Walzenröhren aufgrund hohen Verschleißes das bisher übliche Neueinstellen, auch Nachsetzen genannt, bei den Zahnradpaarungen entfallen, da diese nicht länger vorhanden sind. Außerdem ermöglichen die genannten Einzelantriebe eine verringerte Maschinenhöhe, da der bislang oben auf die Maschine aufgesetzte Zentralantrieb entfällt. Insofern ist die erfindungsgemäße Walzenreibmaschine äußerst kompakt und hat nur einen geringen Raumbedarf.

Vorteilhafterweise ist jede separate Antriebseinheit in Form eines Getriebemotors ausgebildet, wobei die einzelnen Getriebemotoren vorzugsweise über Frequenzumrichter separat regelbar sind. Derartige Getriebemotoren und Frequenzumrichter sind auf dem Markt ohne weiteres verfügbar.

Gemäß einer Weiterbildung der Erfindung sind die separaten Antriebseinheiten mittels einer vorzugsweise zentralen, programmierbaren Steuereinrichtung steuerbar, wobei vorzugsweise die für verschiedene Massen/Produktrezepturen optimalen Betriebsparameter, wie Drehzahlen und Friktionen, in der Steuereinrichtung unter der jeweiligen Masse/Produktrezeptur abspeicherbar sind. Insofern sind in der Praxis für verschiedene Produktrezepturen lediglich einmalig die optimalen Drehzahlen und Friktionen zu ermitteln bzw. hochzurechnen oder aus Erfahrung bereitzustellen. Diese Einstellungen bzw. Werte können dann in der Steuereinrichtung hinterlegt bzw. abgespeichert werden. Dadurch kann die Zeit zum Umstellen der Walzenreibmaschine von einem Produkt auf ein anderes Produkt und damit die Stillstandszeit der Maschine auf ein Minimum reduziert werden. Durch die Abspeicherung der optimalen Betriebsparameter für jede Masse/Produktrezeptur ist auch die Gefahr von Fehleinstellungen der Maschine deutlich reduziert. Einmal eingestellte bzw. abgespeicherte Daten stehen für einen weiteren Anwendungsfall sicher und unproblematisch wieder zur Verfügung.

Gemäß einer anderen Weiterbildung der Erfindung ist die Steuereinrichtung derart ausgebildet, dass bei einem Wechsel von einer Masse zu einer anderen Masse lediglich die gewünschte Masse/Produktrezeptur anzuwählen ist und sich die Maschine dann automatisch selbst auf die entsprechenden Betriebsparameter, wie Drehzahlen und Friktionen, einstellt. Insofern ist zwar ein manuelles Nachjustieren möglich, im Normalfall jedoch nicht erforderlich, so dass die Maschine bereits nach kürzester Zeit zum Verarbeiten eines anderen Produkts einsatzfähig ist. Die erfindungsgemäße Walzenreibmaschine ist daher nicht nur äußerst flexibel und an den jeweiligen Anwendungsfall anpassbar, sie kann darüber hinaus die jeweiligen Massen/Produkte äußerst wirtschaftlich verarbeiten, da sie in der Lage ist, eine Vielzahl von Massen/Produkten verarbeiten zu können.

Gemäß einer anderen, bevorzugten Weiterbildung der Erfindung ist ferner eine Einrichtung zum Messen der Schichtdicke auf wenigstens einer der Walzen, vorzugsweise auf der obersten Walze, vorgesehen und ist die Steuereinrichtung derart ausgebildet, dass die Betriebsparameter einer oder mehrerer Walzen in Abhängigkeit der gemessenen Schichtdicke vorzugsweise automatisch einstell- bzw. veränderbar sind. In dem letztgenannten Fall regelt sich die Maschine gewissermaßen selbst und passt sich selbst an geänderte Produktergebnisse an. Dadurch ist eine gleichbleibende, hohe Produktqualität und eine sogenannte Einkorn-Schicht bei dem die Maschine verlassenden Produkt sichergestellt. Die Maschine ist in der Lage, sich somit automatisch über ein Ändern der Drehzahlen und/oder der Friktionen auf einer oder mehreren Walzen und damit auch auf sämtlichen Walzen an den jeweiligen Anwendungsfall, also die spezielle, zu erreichende Produktqualität, anzupassen.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Seitenansicht einer Walzenreibmaschine unter teilweiser Weglassung bestimmter Elemente, wie z.B. der Verkleidung, der Maschine; und
- Fig. 2: eine schematische Vorderansicht der Maschine in Fig. 1 von rechts gesehen.

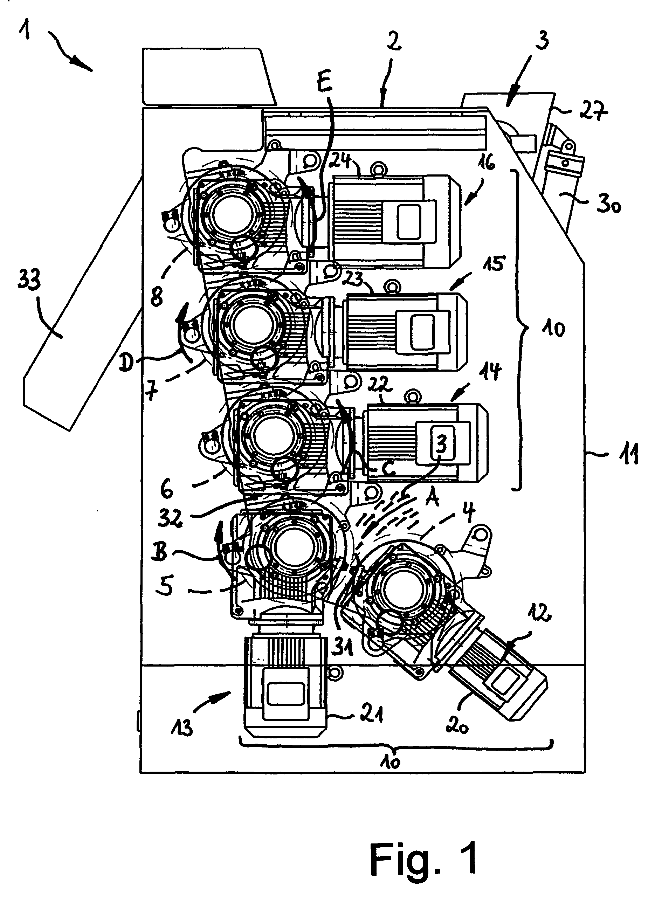

In Fig. 1 ist schematisch eine Seitenansicht einer Walzenreibmaschine 1 gezeigt. Die Walzenreibmaschine 1 ist gemäß der dargestellten Ausführungsform ein Fünfwalzwerk 2 zum Vermahlen teigig-pastöser Massen 3, wie Schokoladenmassen. Die Walzenreibmaschine 1 ist also vorzugsweise, aber nicht ausschließlich ein Fünfwalzwerk 2.

Die Walzenreibmaschine 1 hat mehrere hinter- und/oder übereinander angeordnete Walzen 4 - 8, wobei bei dem gezeigten Fünfwalzwerk 2 eben die genannten fünf Walzen 4 - 8 vorgesehen sind.

Die Walzen 4 - 8 sind mittels einer Antriebseinrichtung 10 drehbar. In der Darstellung gemäß Fig. 1 sind Teile einer Verkleidung 11 der Maschine 1 weggelassen, damit die einzelnen Walzen und die Antriebseinrichtung sichtbar sind.

Erfindungsgemäß weist die Antriebseinrichtung 10 für jede Walze 4 - 8 eine eigene, separate Antriebseinheit 12 - 16 auf, wobei die einzelnen Antriebseinheiten 12 - 16 unabhängig voneinander steuerbar sind. Wie in Fig. 1 angedeutet, ist jede separate Antriebseinheit 12 - 16 in Form eines Getriebemotors 20 - 24 ausgebildet. Die einzelnen Getriebemotoren 20 - 24 sind vorzugsweise über nicht näher gezeigte Frequenzumrichter separat regelbar. Jeweils ein Getriebemotor treibt eine Walze an, wobei, wie zuvor erwähnt, der jeweilige Antrieb einer Walze unabhängig von demjenigen einer anderen Walze ist.

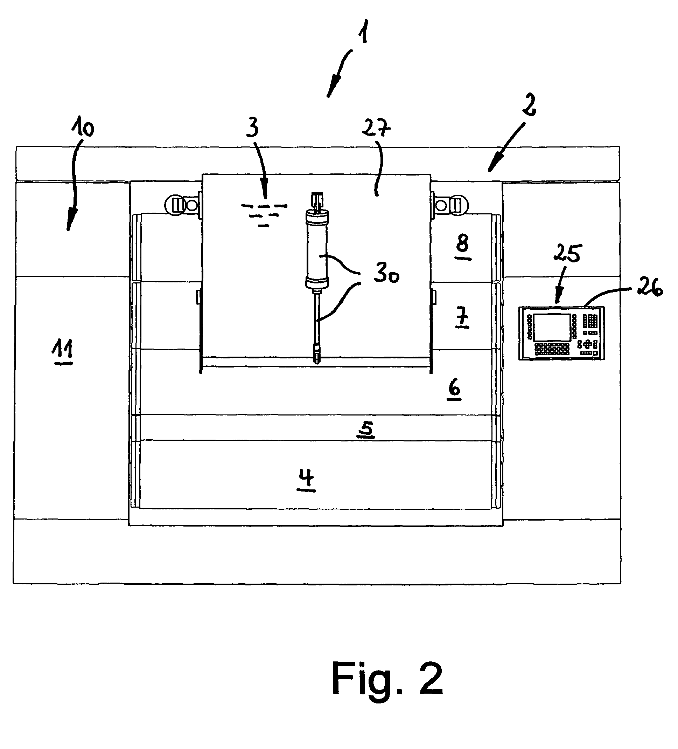

Gemäß einer besonders bevorzugten Ausführungsform der Erfindung sind die separaten Antriebseinheiten 12 - 16 mittels einer zentralen, programmierbaren Steuereinrichtung 25 steuerbar. Die Steuereinrichtung 25 ist schematisch in Fig. 2 angedeutet. In der Steuereinrichtung 25 sind die für verschiedene Massen 3, vorzugsweise Produktrezepturen, optimalen Betriebsparameter, wie Drehzahlen und Friktionen, für jede Walze und jede Antriebseinheit unter der jeweiligen Masse/Produktrezeptur abspeicherbar. Vorzugsweise ist die Steuereinrichtung 25 derart ausgebildet, dass bei einem Wechsel von einer Masse zu einer anderen Masse lediglich die gewünschte Masse/Produktrezeptur in einer Eingabeeinheit 26 anzuwählen ist und sich die Maschine 1 dann automatisch selbst auf die entsprechenden Betriebsparameter, wie Drehzahlen und Friktionen, einstellt.

Gemäß einer besonders bevorzugten Ausführungsform der Erfindung ist ferner eine nicht näher gezeigte Einrichtung zum Messen der Schichtdicke auf wenigstens einer der Walzen 4 - 8, vorzugsweise auf der obersten Walze 8, vorgesehen. Bei dieser Ausführungsform ist die Steuereinrichtung 25 derart ausgebildet, dass die Betriebsparameter einer oder mehrerer Walzen 4 - 8 in Abhängigkeit der gemessenen Schichtdicke vorzugsweise automatisch einstell- bzw. veränderbar sind.

Nachfolgend wird der Betrieb der erfindungsgemäßen Walzenreibmaschine 1 näher erläutert.

Die zu bearbeitende Masse 3 wird in einen Vorbehälter 27 eingefüllt, welcher mittels einer Kolben-Zylinder-Einheit 30 verstellbar ist. Die Masse 3, also beispielsweise das Kakaoprodukt, wird über den Vorbehälter 27 in den Spalt 31 zwischen Walze 4 und Walze 5 in Richtung des Pfeils A eingegeben, dann in Richtung des Pfeils B um die Walze 5 herum in den Spalt 32 zwischen Walze 5 und 6 usw. fortgeführt, d.h. mäanderförmig von unten nach oben um die Walzen 5, 6, 7 und 8 herum geführt (siehe auch Pfeile C, D und E) und schließlich von der oberen Walze 8 in eine sogenannte Ablaufschurre 33 abgeschält. Von dort wird die Masse einer weiteren, nicht näher gezeigten Verarbeitung zugeleitet.

Üblicherweise sind die Walzen 4 - 8 bombiert, d.h. ballig bzw. bauchig ausgebildet, so dass sie in ihrem jeweils mittleren Abschnitt einen größeren Durchmesser als zu den Rändern hin aufweisen. Dies ist der besseren Übersicht halber in den Fig. 1 und 2 nicht dargestellt. Dadurch ergibt sich ein weitgehend konstanter Liniendruck von den einen Spalt bildenden Walzen auf die zu verarbeitende Masse bzw. das Produkt.

Die einzelnen Antriebseinheiten 12 - 16 mit ihren Getriebemotoren 20 - 24 haben eine Leistung, welche in den Fig. 1 und 2 von der Antriebseinheit 16 bzw. dem Getriebemotor 24, d.h. von oben, zur Antriebseinheit 12, d.h. zum Getriebemotor 20, also nach unten hin abnimmt. Insofern hat die oberste, fünfte Walze 8 den leistungsstärksten und damit größten Getriebemotor 24 und die unterste, erste Walze 4 die Antriebseinheit 12 bzw. den Getriebemotor 20 mit der geringsten Leistung. Dies ist darauf zurückzuführen, dass, wie eingangs erwähnt, die unterste Walze 4 mit der geringsten Drehzahl und der größten Schichtdicke (etwa 150 - 200 µm) im Walzenspalt, die oberste Walze 8 hingegen mit der höchsten Drehzahl und der geringsten Schichtdicke (etwa 15 - 20 µm) im Walzenspalt rotiert. Für einen konstanten Durchsatz durch sämtliche Walzenspalte ergibt sich daher die zuvor erwähnte Drehzahlerhöhung von unten nach oben. Vorzugsweise beträgt die mögliche Leistungs- bzw. Drehzahländerung jeder Antriebseinheit etwa ± 20 %.

Damit ist eine Walzenreibmaschine geschaffen, welche flexibler an den jeweiligen Anwendungsfall anpassbar und in der Lage ist, die jeweilige Masse bzw. das jeweilige Produkt äußerst wirtschaftlich verarbeiten zu können.

## Patentansprüche

1. Walzenreibmaschine, insbesondere Fünfwalzwerk (2) zum Vermahlen teigig-pastöser Massen (3), wie Schokoladenmassen, mit mehreren hinter- und/oder übereinander angeordneten Walzen (4 - 8), welche mittels einer Antriebseinrichtung (10) drehbar sind,
**dadurch gekennzeichnet,dass**
die Antriebseinrichtung (10) für jede Walze (4 - 8) eine eigene, separate Antriebseinheit (12 - 16) aufweist und die einzelnen Antriebseinheiten (12 - 16) unabhängig voneinander steuerbar sind.

2. Walzenreibmaschine nach Anspruch 1, **dadurch gekennzeichnet, dass** jede separate Antriebseinheit (12 - 16) in Form eines Getriebemotors (20 - 24) ausgebildet ist und die einzelnen Getriebemotoren (20 - 24) vorzugsweise über Frequenzumrichter separat regelbar sind.

3. Walzenreibmaschine nach Anspruch 1 oder 2, **dadurch gekennzeichnet, dass** die separaten Antriebseinheiten (12 - 16) mittels einer zentralen, programmierbaren Steuereinrichtung (25) steuerbar sind.

4. Walzenreibmaschine nach Anspruch 3, **dadurch gekennzeichnet, dass** die für verschiedene Massen (3), vorzugsweise Produktrezepturen, optimalen Betriebsparameter, wie Drehzahlen und Friktionen, in der Steuereinrichtung (25) unter der jeweiligen Masse (3)/Produktrezeptur abspeicherbar sind.

5. Walzenreibmaschine nach Anspruch 4, **dadurch gekennzeichnet, dass** die Steuereinrichtung (25) derart ausgebildet ist, dass bei einem Wechsel von einer Masse zu einer anderen Masse lediglich die gewünschte Masse/Produktrezeptur in einer Eingabeeinheit (26) anzuwählen ist und sich die Maschine (1) dann automatisch selbst auf die entsprechenden Betriebsparameter, wie Drehzahlen und Friktionen, einstellt.

6. Walzenreibmaschine nach einem der Ansprüche 3 bis 5, **dadurch gekennzeichnet, dass** ferner eine Einrichtung zum Messen der Schichtdicke auf wenigstens einer der Walzen (3 - 8), vorzugsweise auf der obersten Walze (8), vorgesehen und die Steuereinrichtung (25) derart ausgebildet ist, dass die Betriebsparameter einer oder mehrerer Walzen (4, 5, 6, 7, 8) in Abhängigkeit der gemessenen Schichtdicke vorzugsweise automatisch einstell- bzw. veränderbar sind.
